# FASCICULE DE BREVET EUROPEEN

(11) **EP 0 444 980 B1**
(45) Date de publication et mention de la délivrance du brevet: **24.03.1993**
(21) Numéro de dépôt: 91400222.5
(22) Date de dépôt: 30.01.1991
(51) Int. Cl.: B60G 17/01

(54) **Suspension hydropneumatique à correction de hauteur active**
Hydropneumatische Aktivaufhängung mit Höhenkorrektur
Active height-correcting hydropneumatic suspension

(30) Priorité: 21.02.1990 FR 9002142
(43) Date de publication de la demande: 04.09.1991
(73) Titulaire: AUTOMOBILES PEUGEOT, 75116 Paris (FR); AUTOMOBILES CITROEN, 92200 Neuilly-sur-Seine (FR)
(72) Inventeur: Edwige, François, F-92800 Puteaux (FR); Alirand, Marc, F-42300 Roanne (FR); Lachaize, Henri, F-92230 Fontenay-aux-Roses (FR)
(74) Mandataire: Durand, Yves Armand Louis

(56) Documents cités:
- FR-A- 2 584 659
- FR-A- 2 630 684
- US-A- 4 741 554

## Description

La présente invention a essentiellement pour objet une suspension hydropneumatique à correction de hauteur active.

On a proposé depuis longtemps des véhicules à suspension hydropneumatique comportant pour chaque roue un vérin reliant la roue à la caisse du véhicule et dont le corps est en liaison hydraulique avec un accumulateur hydropneumatique, par exemple à membrane.

Selon le document FR-A-2 630 684, ces suspensions sont équipées d'un correcteur de hauteur par essieu, qui est dépourvu de moyens de temporisation et qui est associé à un correcteur de débit comportant des moyens d'étranglement escamotables du débit vers les vérins. Ces moyens d'étranglement, quand ils sont en action, temporisent les variations d'assiette du véhicule, mais n'agissent pas sur les déplacements du tiroir du correcteur.

On connaît également des suspensions hydropneumatiques semi-actives comprenant un correcteur de hauteur pour chacune des roues de l'essieu avant du véhicule et un seul correcteur de hauteur pour l'essieu arrière, de manière à définir à chaque instant la hauteur par rapport au sol de trois points de la caisse du véhicule, et ce au niveau de chacune des roues avant et au milieu de l'essieu arrière. Dans ce genre de suspension, des moyens de temporisation, à inertie, sont prévus pour interdire l'intervention des correcteurs pendant le débattement élastique des roues, étant entendu que, de par les connexions hydrauliques entre les trois points mentionnés plus haut, les correcteurs de hauteur peuvent intervenir en cas de virage ou de freinage prolongé du véhicule.

Toutefois, la temporisation, dans les suspensions connues, retardé notablement l'intervention des correcteurs de hauteur en cas de roulis et de tangage du véhicule résultant par exemple et respectivement d'un braquage ou d'un freinage brutal imposé au véhicule.

Aussi, la présente invention a pour but de remédier à ces inconvénients en déclenchant l'intervention des correcteurs de hauteur dès qu'un freinage, un changement de direction ou une accéléra!ion est imposée au véhicule, ce qui améliore considérablement le caractère actif de la suspension.

A cet effet, l'invention a pour objet une suspension hydropneumatique à correction de hauteur active pour véhicule et comprenant notamment un correcteur de hauteur pour l'essieu avant ou un correcteur de hauteur associé à chaque roue de cet essieu avant, et un correcteur de hauteur pour l'essieu arrière, ces correcteurs de hauteur étant chacun hydrauliquement reliés à un vérin de suspension, caractérisée en ce que chaque correcteur de hauteur coopère avec un initiateur commandé par une action d'accélération, de freinage et/ou de braquage sur le véhicule et agissant instantanément sur le tiroir du correcteur de hauteur correspondant pour court-circuiter les moyens de temporisation dont est muni ledit correcteur de hauteur, afin d'exercer une action anti-tangage et/ou anti-roulis.

Ainsi, en ligne droite sans accélération ni freinage, les roues débattent élastiquement, puisque les moyens de temporisation interdisent le déplacement intempestif du tiroir du correcteur de hauteur. Par contre, en cas d'accélération, de freinage ou de virage, l'initiateur anticipe sur le tangage ou le roulis en déplaçant immédiatement le tiroir du correcteur, et cela en court-circuitant les moyens de temporisation précités.

Suivant une autre caractéristique préférée de l'invention, le tiroir de chaque correcteur de hauteur, en plus d'une liaison élastique avec un élément non suspendu débattant avec la roue, est actionnable par un électro-aimant relié à un calculateur électronique.

Suivant encore une autre caractéristique préférée de la suspension selon cette invention, chaque correcteur de hauteur est muni de moyens temporisateurs court-circuitant les moyens de temporisation précités, après que le tiroir ait effectué une course définie et provoquée par l'initiateur.

Suivant un mode de réalisation préféré, les moyens temporisateurs précités sont constitués par au moins un conduit étranglé ou non reliant les deux chambres à huile de part et d'autre du correcteur de hauteur et comportant chacune une membrane souple et déformable sous l'effet du déplacement du tiroir.

Plus précisément, les moyens temporisateurs précités peuvent se composer de deux conduits étranglés ou non reliant chacun l'une des chambres à huile du correcteur de hauteur avec un point de la chemise dans laquelle coulisse le tiroir qui n'est relié à l'autre chambre à huile qu'après la course précitée et définie de ce tiroir provoquée par l'initiateur.

Suivant une autre caractéristique préférée de l'invention, chaque initiateur se compose d'un corps avec une chemise montée étanche à chaque extrémité et un piston monté coulissant dans ce corps et en équilibre entre deux ressorts prenant appui sur les chemises, chaque chemise comportant au moins un perçage dans lequel coulisse un tiroir prenant appui sur le piston, de façon qu'une pression hydraulique sur le tiroir provoque un déplacement du piston donc d'un volume d'huile qui à son tour provoque le déplacement du tiroir du correcteur de hauteur.

On précisera ici que l'initiateur précité peut comprendre au moins deux chambres à fluide hydraulique séparées par le piston et communiquant respectivement par des conduits avec les deux chambres à huile du correcteur de hauteur.

Selon encore une autre caractéristique préférée de la suspension de l'invention, l'initiateur comprend en association un premier ensemble de tiroirs susceptibles d'agir sur une face ou l'autre du piston pour assurer une fonction anti-tangage, et un deuxième ensemble de tiroirs également susceptibles d'agir sur ce piston pour assurer une fonction anti-roulis dans le cas où chacune des roues de l'essieu avant est équipée d'un correcteur de hauteur.

On précisera encore ici que le premier ensemble de tiroirs affectés à la fonction anti-tangage peut se composer de deux tiroirs commandés l'un par une pression dépendant du freinage et l'autre par une pression dépendant de l'accélération, tandis que le deuxième ensemble de tiroirs se compose de deux tiroirs dont les sections sont proportionnelles aux sections utiles d'un vérin d'assistance de direction, chaque tiroir étant commandé par la pression de l'une ou l'autre des deux chambres de ce vérin.

Suivant encore une autre caractéristique préférée de cette suspension, les initiateurs sont reliés aux correcteurs de hauteur de telle façon qu'une pression de freinage se traduise par une augmentation de pression dans les vérins de suspension de l'essieu avant et une baisse de pression dans les vérins de suspension de l'essieu arrière, qu'une accélération provoque une baisse de pression dans les vérins de suspension avant et une augmentation de pression dans les vérins de suspension arrière, et qu'une action sur le volant de direction du véhicule provoque une baisse de pression dans le vérin avant intérieur au virage et une augmentation de pression dans le vérin avant extérieur au virage.

Mais d'autres caractéristiques et avantages de l'invention apparaîtront mieux dans la description détaillée qui suit et se réfère aux dessins annexés, donnés uniquement à titre d'exemple, et dans lesquels.

La figure 1 est une vue très schématique d'une suspension hydropneumatique à correction de hauteur active et à initiateur dynamique, conforme aux principes de l'invention.

La figure 2 est une vue schématique et en coupe de l'ensemble initiateur-correcteur associé à l'essieu arrière d'un véhicule.

La figure 3 est une vue en coupe d'un correcteur de hauteur perfectionné selon cette invention, cette coupe étant effectuée suivant un plan orthogonal à la coupe du correcteur illustrée par la figure 2.

La figure 4 est une vue similaire à la figure 2, mais montrant l'ensemble initiateur-correcteur représenté schématiquement sur la partie gauche de la figure 1, c'est-à-dire associé à la roue gauche de l'essieu avant du véhicule.

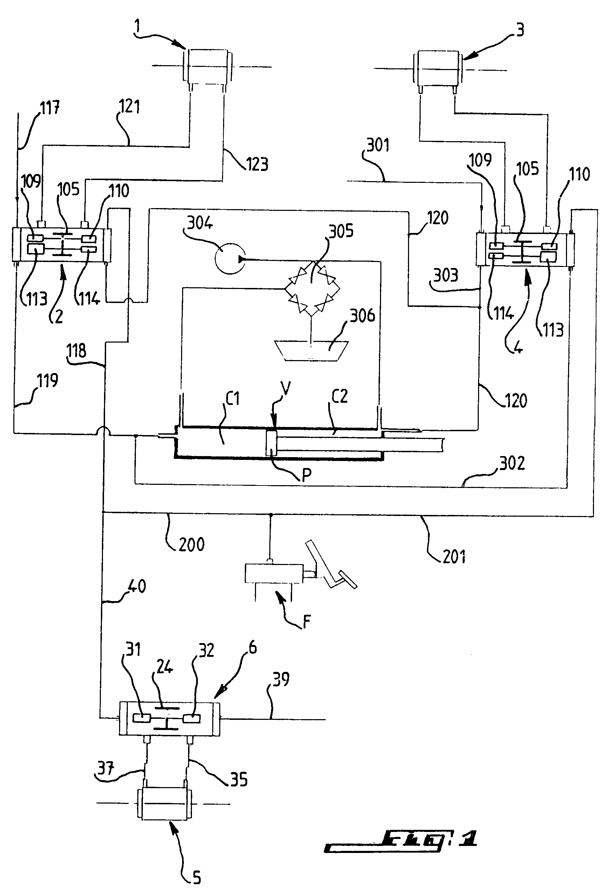

En se reportant plus particulièrement à la figure 1, on voit qu'une suspension conforme à l'invention, et suivant un exemple de réalisation, comprend essentiellement un correcteur de hauteur 1 associé à la roue avant gauche RG de l'essieu avant d'un véhicule et hydrauliquement relié à un initiateur 2, un correcteur de hauteur 3 associé à la roue avant droite de l'essieu avant et en liaison hydraulique avec un initiateur 4, et un correcteur de hauteur 5 pour l'essieu arrière du véhicule et lui aussi en liaison hydraulique avec un initiateur 6.

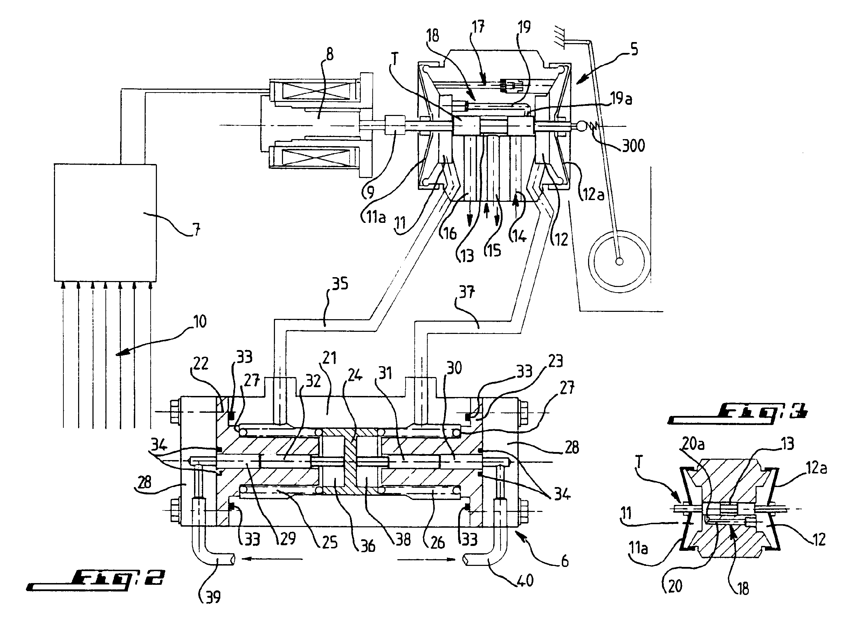

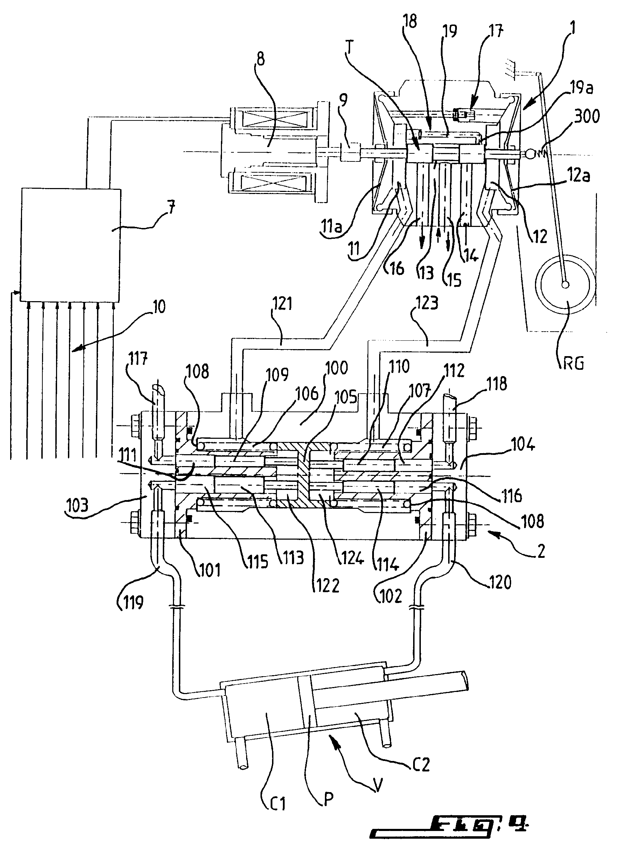

Comme montré sur les figures 2 et 4, un calculateur électronique 7 reçoit des informations de différents capteurs (non représentés), les analyse et commande un électro-aimant 8 accouplé comme on le voit en 9 au tiroir T de chaque correcteur de hauteur 1, 3 et 5. Les flèches repérées en 10 matérialisent différents signaux en provenance des capteurs et qui peuvent être par exemple un signal de freinage, un signal d'accélération longitudinale ou de position accélérateur, un signal rapport de boite de vitesses, un signal accélération verticale de la caisse, un signal accélération verticale de roue, un signal vitesse véhicule et un signal régime moteur.

Chaque correcteur de hauteur 1, 3, 5 comprend, comme connu en soi, un corps dans lequel est monté coulissant le tiroir T et qui comporte deux chambres à huile 11, 12 opposées et limitées chacune par une membrane souple 11a, 12a déformable avec le déplacement du tiroir T qui coulisse dans une chambre 13 ménagée dans le corps de chaque correcteur 1, 3 et 5. Cette chambre ou chemise 13 pour le tiroir T communique par un conduit 14 avec un circuit d'admission de fluide hydraulique haute pression, par un conduit 15 avec un circuit utilisation essentiellement constitué par un vérin de suspension (non représenté) entre roue et caisse et associé à un accumulateur hydropneumatique par exemple à membrane (non représenté), et par un conduit 16 à un circuit de retour ou de fuite du fluide hydraulique vers une bâche ou un réservoir.

Chaque correcteur de hauteur 1, 3, 5 comporte également, comme connu en soi, des moyens de temporisation 17 revêtant ici la forme d'un élément connu sous la dénomination "Dash-pot", et reliant les deux chambres à huile 11 et 12, de sorte que le passage de l'huile d'une chambre à l'autre, c'est-à-dire l'intervention du correcteur de hauteur, est interdit momentanément, sur une durée d'environ 8 secondes, alors que le débattement élastique des roues se produit.

Conformément à l'invention, et comme on le voit sur les figures 2, 3 et 4, chaque correcteur de hauteur, 1, 3, 5 est muni de moyens temporisateurs 18 court-circuitant des moyens de temporisation 17 après que le tiroir T ait effectué un déplacement défini et provoqué par l'initiateur 2, 4, 6 comme on l'expliquera en détail plus loin.

Ces moyens temporisateurs 18 sont constitués, comme on le voit sur les figures 2 à 4, par deux conduits étranglés ou non 19, 20 reliant les deux chambres à huile 11, 12 de part et d'autre du correcteur et susceptibles de court-circuiter les moyens de temporisation 17 après une course définie du tiroir T de part et d'autre de la position d'équilibre.

Plus précisément, le conduit 19 relie la chambre à huile 11 avec un point 19a de la chemise 13 dans laquelle coulisse le tiroir T, et le conduit 20 (figure 3) relie la chambre 12 avec un autre point 20a de la chemise 13. Ainsi, on comprend que les deux chambres à huile 11, 12 seront mises en communication par le conduit 19 ou le conduit 20 selon un déplacement défini du tiroir T dans un sens ou dans l'autre. On observera ici que les conduits 19 et 20 peuvent éventuellement comporter un gicleur (non représenté).

L'initiateur 2, 4, 6 hydrauliquement associé au correcteur de hauteur 1, 3, 5 respectivement peut recevoir un certain nombre de signaux sous forme de pressions et transforme ces pressions en volumes pour alimenter les chambres 11, 12 du correcteur de hauteur correspondant.

On décrira tout d'abord l'initiateur 6 relié au correcteur de hauteur 5 associé à l'essieu arrière du véhicule, en se reportant plus particulièrement à la figure 2.

L'initiateur 6 se compose d'un corps 21 aux deux extrémités duquel est montée de manière étanche une chemise 22, 23. Un piston 24 est monté coulissant dans le corps 21 et est maintenu en équilibre entre deux ressorts 25, 26 prenant chacun appui sur un épaulement annulaire 27 de chaque chemise. Chaque chemise 22, 23 maintenue aux extrémités du corps 21 par des flasques 28, comporte un perçage 29, 30 dans lequel coulisse un tiroir 31, 32 prenant appui sur le piston 24, de façon qu'une pression hydraulique sur un tiroir provoque un déplacement dudit piston qui à son tour provoque le déplacement du tiroir T du correcteur de hauteur 5.

On a montré en 33 des joints assurant l'étanchéité des chemises 22, 23 vis-à-vis du corps 21 de l'initiateur 6, et en 34 d'autres joints garantissant l'étanchéité des tiroirs 31, 32. Un conduit 35 raccorde la chambre à huile 36 formée d'un côté du piston 24 de l'initiateur 6 à la chambre à huile 11 du correcteur 5, et un autre conduit 37 raccorde la chambre à huile 38 formée de l'autre côté du piston 24 de l'initiateur 6, à l'autre chambre à huile 12 du correcteur 5. Le perçage 29 dans lequel coulisse le tiroir 32 est raccordé par une conduite 39 à une source de pression commandée par exemple par une accélération du véhicule, tandis que le perçage 30 dans lequel coulisse le tiroir 31 est relié par une conduite 40 à une source de pression commandée par exemple par une action de freinage sur le véhicule.

On décrira maintenant, en se reportant à la figure 4, la structure de l'initiateur 2 reliée au correcteur de hauteur 1 associé à la roue gauche RG de l'essieu avant du véhicule, étant entendu que la structure du correcteur est la même que celle du correcteur 5 précédemment décrit et que celle du correcteur 3 associé à la roue droite de l'essieu avant.

L'initiateur 2 a une structure qui correspond sensiblement à une structure doublée de l'initiateur 6 précédemment décrit. Il comprend un corps 100 fermé à ses deux extrémités, de façon étanche, par deux chemises 101, 102 fixées sur le corps par des flasques 103, 104. Dans le corps 100 coulisse un piston 105 en équilibre entre deux ressorts 106, 107 prenant appui sur un épaulement 108 pratiqué sur les chemises 101 et 102 respectivement.

Le piston 105 peut être actionné par un premier ensemble de deux tiroirs identiques 109, 110 coulissant respectivement dans des perçages 111, 112 pratiqués respectivement dans les chemises 101 et 102.

Le piston 105 peut également être actionné par un deuxième ensemble de deux tiroirs 113, 114 montés coulissant respectivement dans des perçages 115, 116 ménagés dans les chemises 101, 102 respectivement. On observera déjà ici, comme on le voit bien sur la figure 4, que le tiroir 113 possède une section plus grande que celle du tiroir 114.

Le premier ensemble de tiroirs identiques 109, 110 peut agir sur le piston 105 pour assurer une fonction anti-tangage. L'un 109 de ces deux tiroirs est commandé par une pression dépendant de l'accélération et arrivant par la conduite 117 raccordée au perçage 111 dans lequel coulisse ledit tiroir 109. L'autre tiroir 110 peut être commandé par une pression dépendant du freinage et arrivant par une conduite 118 raccordée au perçage 112 dans lequel coulisse ledit tiroir 110.

Chaque tiroir 113, 114 du deuxième ensemble de tiroirs est commandé, suivant l'exemple de réalisation représenté, par la pression de l'une ou l'autre de deux chambres C1, C2 d'un vérin d'assistance de direction V. Plus précisément, la chambre C1 de ce vérin est raccordée par un conduit 119 au perçage 115 dans lequel coulisse le tiroir 113, tandis que la chambre C2 du vérin V est raccordée par un conduit 120 au perçage 116 dans lequel coulisse le tiroir 114. Les sections des deux tiroirs 113 et 114 sont proportionnelles aux sections utiles du piston P coulissant dans le vérin V.

On a montré en 121 un conduit raccordant la chambre à huile 122 formée d'un côté du piston 105, à la chambre à huile 11 du correcteur de hauteur 1, et on a montré en 123 un autre conduit raccordant la chambre à huile 124 formée de l'autre côté du piston 105 de l'initiateur 2, à l'autre chambre à huile 12 du correcteur de hauteur 1.

On observera que l'initiateur 4 relié au correcteur de hauteur 3 associé à la roue droite de l'essieu avant est identique à l'initiateur 2 précédemment décrit, sauf que les deux tiroirs 113 et 114 sont inversés, comme on peut le comprendre en se reportant à la figure 1.

Sur cette figure, on a montré schématiquement en F la commande de freinage d'un véhicule en liaison hydraulique par une conduite 200 avec les conduits 40 et 118 aboutissant aux initiateurs 6 et 2 respectivement, étant entendu que la commande de freinage F est aussi reliée par une conduite 201 à l'initiateur 4.

Mais, pour une meilleure compréhension de l'invention, on expliquera ci-après le fonctionnement du système initiateur-correcteur dans le cas d'un coup de frein, en se reportant plus particulièrement à la figure 2.

Dès le début d'un coup de frein qui, comme on le sait, provoque un tangage du véhicule, c'est-à-dire un affaissement de sa partie avant et un soulèvement de sa partie arrière, la pression arrivant par le conduit 40 déplace le tiroir 31 qui à son tour pousse le piston 24 de l'initiateur 6. Ainsi, un certain volume de fluide proportionnel à la pression de freinage sera transféré de la chambre 36 via le conduit 35 à la chambre 11 du correcteur de hauteur, étant entendu que le même volume de fluide sera aspiré par le piston 24 de la chambre 12 du correcteur 5 via le conduit 37. Il en résulte que le volume du fluide déplacé exerce une pression sur la membrane 11a de la chambre à huile 11 du correcteur, ce qui sollicitera fortement vers la gauche le tiroir T du correcteur, et mettra le circuit de suspension arrière à la fuite par le conduit de retour 16. Ainsi, dès le début d'un coup de frein, l'initiateur 6 agira instantanément sur le correcteur de hauteur, de sorte que le mouvement de tangage au freinage sera immédiatement annihilé. Cependant cette action ne doit pas se poursuivre pendant quasiment toute la durée du freinage, sinon l'essieu arrière se retrouverait affaissé sur ses butées. C'est pourquoi, après une course définie, le tiroir T découvre l'extrémité 19a du conduit 19 qui met en communication les chambres à huile 11 et 12 du correcteur de hauteur. Dès lors, le tiroir T n'est sollicité que par la commande élastique 300 reliant le tiroir T aux bras de roue arrière et assistée par l'électro-aimant 8 qui prend le relais et qui, grâce au calculateur électronique 7 affine la correction de hauteur provoquée dès le début par l'initiateur 6.

En bref, on comprend donc que le conduit 19, en court-circuitant ou remplaçant les moyens de temporisation 17 permet au correcteur de hauteur de combattre sans retard et quasiment instantanément le tangage d'un véhicule en cas de coup de frein. Bien évidemment, comme on peut le comprendre en se reportant à la figure 1, les initiateurs 2, 4, 6 sont reliés aux correcteurs de hauteur 1, 3, 5 respectivement de façon que la pression de freinage se traduise par une détente des vérins de suspension (non représentés) de l'essieu avant et par une compression des vérins de suspension, (non représentés) de l'essieu arrière. Mais le fonctionnement de l'ensemble initiateur 6-correcteur 5 qui vient d'être décrit est en cas de coup de frein et, dans son principe exactement le même pour les initiateurs 2 et 4 dont le tiroir 110 agira sur le piston 105 dès le début d'un coup de frein.

Par ailleurs, dans le cas d'une accélération qui provoquera un tangage inverse de celui procuré par un coup de frein, la pression d'huile arrivant par le conduit 39 à l'initiateur 6, par le conduit 117 à l'initiateur 2 et par un conduit 301 à l'initiateur 4 agira sur le tiroir 32 (opposé au tiroir 31) et sur les tiroirs 109 (opposés aux tirois 110) pour déplacer les pistons 24, 105 vers la droite, de sorte que c'est la chambre à huile 12 des correcteurs de hauteur qui recevra, via le conduit 37, 123, un volume d'huile proportionnel au coup d'accélérateur, et le fonctionnement sera exactement le même que celui décrit précédemment à propos du freinage, mais suivant un mouvement inverse, étant entendu ici que le conduit court-circuitant les moyens de temporisation 17 sera le conduit 20 que l'on voit sur la figure 3. En d'autres termes, les initiateurs 2, 4 et 6 commanderont les correcteurs sur un coup d'accélérateur pour provoquer immédiatement une correction de hauteur. Bien évidemment, l'accélération provoquera une compression des vérins de suspension de l'essieu avant et une détente des vérins de suspension de l'essieu arrière.

On expliquera maintenant brièvement la fonction anti-roulis de la suspension de l'invention, cette fonction étant réalisée par les initiateurs 2 et 4 associés à chaque roue de l'essieu avant.

Revenant à la figure 1, on voit que les chambres C1 et C2 du vérin de direction V sont respectivement reliées à l'initiateur gauche 2 par respectivement les conduits 119 et 120 comme expliqué plus haut et comme représenté sur la figure 4. Les chambres C1 et C2 du vérin V sont également reliées à l'initiateur droit 4 par respectivement un conduit 302 et un conduit 303 raccordé à la conduite 120. Comme on le voit sur la figure 4, les chambres C1 et C2 du vérin V sont alimentées par un circuit de fluide hydraulique comprenant notamment et comme connu en soi une pompe 304, un régulateur 305 constitué par un jeu de vannes commandées par le volant de direction du véhicule, et une bâche 306.

Dans le cas d'un braquage à gauche, il se produit une pression d'huile dans les deux chambres C1 et C2 du vérin V, et le piston P se déplace vers la droite du fait de la section utile plus grande du piston P, du côté de la chambre C1. C'est dire que la pression d'huile via les conduites 120 et 303 agira respectivement sur le tiroir 114 de l'initiateur 2 pour pousser le piston 105 de cet initiateur vers la gauche, et sur le tiroir 114 de l'initiateur droit 4 pour pousser le piston 105 de cet initiateur vers la droite, les deux initiateurs 2 et 4 étant reliés à leurs correcteurs respectifs 1 et 3 de telle façon qu'une action sur le volant de direction pour effectuer un braquage à gauche provoquera une compression du vérin de suspension associé au correcteur 1 et une détente du vérin de suspension associé au correcteur 3 qui, dans ce cas, est extérieur au virage.

Dans le cas d'un braquage à droite, seule une pression d'huile existe dans la petite chambre C2 du vérin V, de sorte que le piston P de ce vérin se déplace vers la gauche, la chambre C1 étant alors mise à la bâche 306. Dans ce cas, une pression d'huile s'exerce via les conduits 119 et 302 sur les tiroirs 113 de plus grande section, des initiateurs 2 et 4 respectivement, ces initiateurs étant évidemment reliés à leurs correcteurs respectifs 1 et 3 de telle façon que, dans le cas d'une action sur le volant de direction du véhicule pour effectuer un virage à droite, il se produit une compression du vérin de suspension associé au correcteur 3 et une détente du vérin de suspension associé au correcteur 1 qui est ici extérieur au virage.

Bien entendu, les tiroirs 113 ou 114 agissant sur le piston 105 agiront sur les correcteurs 1 et 3 de la même façon que décrit précédemment à propos d'un freinage ou d'une accélération. C'est dire en bref qu'un changement de direction du véhicule provoquant un roulis sera immédiatement répercuté sur les correcteurs de hauteur de l'essieu avant grâce aux initiateurs 2 et 4 qui anticipent sur le roulis en déplaçant immédiatement le tiroir de ces correcteurs, tandis qu'après une course définie du tiroir, les moyens de temporisation 17 seront court-circuités, et le calculateur électronique 7 via l'électro-aimant 18 affinera la correction.

Il convient d'observer, qu'en cas d'une action de freinage, comme il a été expliqué plus haut, le déplacement du tiroir 110 qui à son tour pousse le piston 105, n'a aucun effet perturbateur sur le circuit de direction via le tiroir 113, étant donné que les chambres C1, C2 du vérin de direction V sont reliées à la bâche 306 lorsque le volant de direction n'est pas sollicité. Autrement dit, le régulateur R n'intervient pour réguler que lorsqu'il se produit un effort de braquage imposé par le volant de direction, ce régulateur demeurant ouvert dans tous les autres cas, de sorte que tout volume de fluide arrivant aux initiateurs, alors qu'aucun effort n'est exercé sur le volant de direction, passe directement des chambres C1 et C2 du vérin V à la bâche 306.

On a donc réalisé suivant l'invention une suspension hydropneumatique à correction de hauteur active grâce à des initiateurs dynamiques associés à chaque correcteur de hauteur. Ainsi, en cas d'accélération, de freinage ou de braquage du véhicule, ces initiateurs anticipent sur le tangage ou le roulis en déplaçant instantanément le tiroir du correcteur, et cela pour une course du tiroir définie et au-delà de laquelle les moyens de temporisation du correcteur sont court-circuités et un calculateur prend le relais pour affiner la correction de hauteur, étant entendu que lorsque le véhicule est en ligne droite, sans être soumis à une accélération ou à un freinage, les roues peuvent se débattre élastiquement et les moyens temporisateurs interdisent le déplacement intempestif du tiroir de correcteur.

Bien entendu, l'invention n'est nullement limitée au mode de réalisation décrit et illustré qui n'a été donné qu'à titre d'exemple.

C'est ainsi que l'on peut prévoir sur les conduits reliant les initiateurs à leurs correcteurs respectifs une électro-vanne ou tout autre système équivalent permettant un passage progressif du fluide afin d'interdire des corrections dynamiques et brusques du système pour des vitesses faibles.

## Revendications

1. Suspension hydropneumatique à correction de hauteur active pour véhicule et comprenant notamment un correcteur de hauteur pour l'essieu avant ou un correcteur de hauteur (1, 3) associé à chacune des roues de cet essieu avant, et un correcteur de hauteur (5) pour l'essieu arrière, ces correcteurs de hauteur étant chacun hydrauliquement reliés à un vérin de suspension, caractérisée en ce que chaque correcteur de hauteur (1, 3, 5) coopère avec un initiateur (2, 4, 6) commandé par une action d'accélération, de freinage et/ou de braquage sur le véhicule et agissant instantanément sur le tiroir (T) du correcteur de hauteur correspondant pour court-circuiter les moyens de temporisation (17) dont est muni ledit correcteur de hauteur, afin d'exercer une action anti-tangage et/ou anti-roulis.

2. Suspension selon la revendication 1, caractérisée en ce que le tiroir (T) de chaque correcteur de hauteur (1, 3, 5), en plus d'une liaison élastique (300) avec un élément non suspendu débattant avec la roue, est actionnable par un électro-aimant (8) relié à un calculateur électronique (7).

3. Suspension selon la revendication 1 ou 2, caractérisée en ce que chaque correcteur de hauteur (1, 3, 5) est muni de moyens temporisateurs (18) court-circuitant les moyens de temporisation précités (17) après que le tiroir (T) ait effectué une course définie et provoquée par l'initiateur (2, 4, 6).

4. Suspension selon la revendication 3, caractérisée en ce que les moyens temporisateurs précités (18) sont constitués par au moins un conduit étranglé ou non reliant les deux chambres à huile (11, 12) de part et d'autre du correcteur (1, 3, 5) et comportant chacune une membrane souple (11a, 12a) et déformable sous l'effet du déplacement du tiroir (T).

5. Suspension selon la revendication 3 ou 4, caractérisée en ce que les moyens temporisateurs précités (18) se composent de deux conduits étranglés ou non (19, 20) reliant chacun l'une des chambres à huile (11, 12) du correcteur de hauteur avec un point (19a, 20a) de la chemise (13) dans laquelle coulisse le tiroir qui n'est relié à l'autre chambre à huile qu'après la course précitée et définie de ce tiroir (T) provoquée par l'initiateur (2, 4, 6).

6. Suspension selon l'une des revendications 1 à 5, caractérisée en ce que chaque initiateur se compose d'un corps (21,100) avec une chemise (22,23,101,102) montée étanche à chaque extrémité et un piston (24, 105) monté coulissant dans ce corps et en équilibre entre deux ressorts (25, 26, 106, 107) prenant appui sur les chemises, chaque chemise comportant au moins un perçage 29, 30, 111, 112, 115, 116) dans lequel coulisse un tiroir (31, 32, 109, 110, 113, 114) prenant appui sur le piston, de façon qu'une pression hydraulique sur le tiroir provoque un déplacement du piston (24, 105) donc d'un volume d'huile qui à son tour provoque le déplacement du tiroir (T) du correcteur de hauteur.

7. Suspension selon l'une des revendications précédentes, caractérisée en ce que l'initiateur précité (2, 4, 6) comprend au moins deux chambres (36, 38, 122, 124) à fluide hydraulique séparées par le piston (24, 105) et communiquant respectivement par des conduits (35, 37, 121, 123) avec les deux chambres à huile (11, 12) du correcteur de hauteur.

8. Suspension selon l'une des revendications précédentes, caractérisée en ce que l'initiateur précité (2, 4) comprend en association un premier ensemble de tiroirs (109, 110) susceptibles d'agir sur le piston (105) pour assurer une fonction anti-tangage et un deuxième ensemble de tiroirs (113, 114) également susceptibles d'agir sur ce piston pour assurer une fonction anti-roulis dans le cas où chacune des roues de l'essieu avant est équipée d'un correcteur de hauteur (1,3).

9. Suspension selon l'une des revendications précédentes, caractérisée en ce que le premier ensemble de tiroirs affectés à la fonction anti-tangage se compose de deux tiroirs commandés l'un (110) par une pression dépendant du freinage et l'autre (109) par une pression dépendant de l'accélération, tandis que le deuxième ensemble de tiroirs se compose de deux tiroirs (113, 114) dont les sections sont proportionnelles aux sections utiles d'un vérin (V) d'assistance de direction, chaque tiroir (113, 114) étant commandé par la pression de l'une ou l'autre des deux chambres (C1, C2) de ce vérin.

10. Suspension selon l'une des revendications précédentes, caractérisée en ce que les initiateurs (2, 4, 6) sont reliés aux correcteurs de hauteur (1, 3, 5) de telle façon qu'une pression de freinage se traduise par une augmentation de pression dans les vérins de suspension de l'essieu avant et une baisse de pression dans les vérins de suspension de l'essieu arrière, qu'une accélération provoque une baisse de pression dans les vérins de suspension avant et une augmentation de pression dans les vérins de suspension arrière, et qu'une action sur le volant de direction provoque une baisse de pression dans le vérin avant intérieur au virage et une augmentation de pression dans le vérin avant extérieur au virage.

## Patentansprüche

1. Hydropneumatische Aufhängung mit aktiver Höhenkorrektur für ein Fahrzeug, mit insbesondere einem Höhenkorrektor für die Vorderachse oder einem jedem der Räder dieser Vorderachse zugeordneten Höhenkorrektor (1, 3), und einem Höhenkorrektor (5) für die Hinterachse, wobei diese Höhenkorrektore jeweils mit einem Aufhängungskraftzylinder hydraulisch verbunden sind, dadurch gekennzeichnet, dass jeder Höhenkorrektor (1, 3, 5) mit einem durch die Beschleunigungs-,Brems- und/oder Lenkungsausschlagswirkung auf das Fahrzeug betätigten Initiator (2, 4, 6) zusammenwirkt und augenblicklich sofort auf den Schieber (T) des entsprechenden Höhenkorrektors wirkt, um die Verzögerungsmittel (17), mit denen der besagte Höhenkorrektor versehen ist, kurzzuschliessen, um eine Antischwankungs-und/oder Antirollwirkung auszuüben.

2. Aufhängung nach Anspruch 1, dadurch gekennzeichnet, dass der Schieber (T) jedes Höhenkorrektors (1, 3, 5), im Zusatz zu einer elastischen Verbindung (300) mit einem nicht aufgehängten, sich mit dem Rad bewegenden Element, durch einen mit einem elektronischen Rechner (7) verbundenen Elektromagneten (8) betätigbar ist.

3. Aufhängung nach Anspruch 1 oder 2, dadurch gekennzeichnet, dass jeder Höhenkorrektor (1, 3, 5) mit Verzögerungsmitteln (18), die die vorgenannten Verzögerungsmittel (17) kurzschliessen nachdem der Schieber (T) einen bestimmten durch den Initiator (2, 4, 6) verursachten Hub durchgeführt hat, versehen ist.

4. Aufhängung nach Anspruch 3, dadurch gekennzeichnet, dass die vorgenannten Verzögerungsmittel (18) durch wenigstens eine die beiden Olkammern (11, 12) beiderseits des Korrektors (1, 3, 5) verbindende gedrosselte oder nicht gedrosselte Leitung gebildet werden, welche Kammern jeweils eine nachgiebige und unter der Wirkung der Verschiebung des Schiebers (T) verförmbare Membrane (11a, 12a) aufweisen.

5. Aufhängung nach Anspruch 3 oder 4, dadurch gekennzeichnet, dass die vorgenannten Verzögerungsmittel (18) aus zwei gedrosselten oder nicht gedrosselten Leitungen (19, 20) bestehen, die jeweils eine der Olkammern (11, 12) des Höhenkorrektors mit einem Punkt (19a, 20a) der Mantelbüchse (13) verbinden, in welcher der Schieber gleitet, der mit der anderen Olkammer erst nach der Durchführung des durch den Initiator (2, 4, 6) veranlassten vorgenannten und bestimmten Hubs dieses Schiebers (T) verbunden wird.

6. Aufhängung nach einem der Ansprüche 1 bis 5, dadurch gekennzeichnet, dass jeder Initiator aus einem Körper (21, 100) mit einer an jedem Ende dicht angeordneten Mantelbüchse (22, 23, 101, 102) und einem Kolben (24, 105) besteht, der gleitend in diesem Körper und im Gleichgewicht zwischen zwei sich an den Mantelbüchsen abstützenden Federn (25, 26, 106, 107) angeordnet ist, wobei jede Mantelbüchse wenigstens eine Bohrung (29, 30, 111, 112, 115, 116) in welcher ein sich an dem Kolben abstützender Schieber (31, 32, 109, 110, 113, 114) gleitet, versehen ist, damit ein hydraulischer Druck auf den Schieber eine Verschiebung des Kolbens (24, 105), also eines Olvolumens verursacht, der seinerseits eine Verschiebung des Schiebers (T) des Höhenkorrektors verursacht.

7. Aufhängung nach einem der vorangehenden Ansprüche, dadurch gekennzeichnet, dass der vorgenannte Initiator (2, 4, 6) wenigstens zwei durch den Kolben (24, 105) getrennte und jeweils durch die Leitungen (35, 37, 121, 123) mit den beiden Olkammern (11, 12) des Höhenkorrektors in Verbindung stehende Kammern (36, 38, 122, 124) für ein hydraulisches fliessfähiges Medium aufweist.

8. Aufhängung nach einem der vorangehenden Ansprüche, dadurch gekennzeichnet, dass der vorgenannte Initiator (2, 4) im Zusammenhang eine erste Gesamtheit von Schiebern (109, 110), die fähig sind, auf den Kolben (105) einzuwirken, um eine Antischwankungsfunktion zu gewährleisten und eine zweite Gesamtheit von Schiebern (113, 114), die ebenfalls fähig sind, auf diesen Kolben einzuwirken, um eine Antirollfunktion zu gewährleisten, in dem Fall wo jedes der Räder der Vorderachse mit einem Höhenkorrektor (1, 3) ausgerüstet ist, aufweist.

9. Aufhängung nach einem der vorangehenden Ansprüche, dadurch gekennzeichnet, dass die erste Gesamtheit von der Antischwankungsfunktion zugewiesenen Schiebern aus zwei Schiebern besteht, deren eine (110) durch einen von der Bremsung abhängenden Druck und deren andere (109) durch einen von der Beschleunigung abhängenden Druck gesteuert werden, während die zweite Gesamtheit von Schiebern aus zwei Schiebern (113, 114) besteht, deren Querschnitte mit den Nutzquerschnitten eines Servolenkungskraftzylinders (V) proportional sind, wobei jeder Schieber (113, 114) durch den Druck der einen oder der anderen der beiden Kammern (C1, C2) dieses Kraftzylinders gesteuert wird.

10. Aufhängung nach einem der vorangehenden Ansprüche, dadurch gekennzeichnet, dass die Initiatore (2, 4, 6) mit den Höhenkorrektoren (1, 3, 5) derart verbunden sind, dass ein Bremsdruck sich durch eine Druckerhöhung in den Aufhängungskraftzylindern der Vorderachse und durch eine Druckverminderung in den Aufhängungskraftzylindern der Hinterachse auswirkt, dass eine Beschleunigung eine Druckabnahme in den vorderen Aufhängungskraftzylindern und eine Druckzunahme in den hinteren Aufhängungskraftzylindern verursacht und dass eine Wirkung auf das Lenkrad eine Druckverminderung in dem innerhalb der Strassenkrümmung liegenden vorderen Kraftzylinder und eine Drucksteigerung in dem ausserhalb der Strassenbiegung liegenden vorderen Kraftzylinder verursacht.

## Claims

1. Hydropneumatic suspension with active height correction for a vehicle, comprising in particular a height corrector for the front axle or a height corrector (1, 3) associated with each one of the wheels of this front axle and a height corrector (5) for the rear axle, these height correctors being each one hydraulically connected to a suspension jack, characterized in that each height corrector (1, 3, 5) co-operates with an initiator (2, 4, 6) controlled by an acceleration, braking and/or locking-over action on the vehicle and acting instantaneously upon this spool (T) of the corresponding height corrector for short-circuiting the time-delay means (17) with which the said height corrector is provided in order to exert an anti-pitching and/or an anti-rolling action.

2. Suspension according to claim 1, characterized in that the spool (7) of each height corrector (1, 3, 5) in addition to an elastic connection (300) with a non-suspended element moving with the wheel is operable by an electro-magnet (8) connected to an electronic computer (7).

3. Suspension according to claim 1 or 2, characterized in that each height corrector (1, 3, 5) is provided with time-delay means (18) short-circuiting the aforesaid time-delay means (17) after the spool (T) has effected a defined stroke caused by the initiator (2, 4, 6).

4. Suspension according to claim 3, characterized in that the aforesaid time-delay means (18) are constituted by at least one throttled or non-throttled duct connecting both oil chambers (11, 12) on either side of the corrector (1, 3, 5) and each one comprising a flexible membrane (11a, 12a) deformable under the effect of the displacement of the spool (T).

5. Suspension according to claim 3 or 4, characterized in that the aforesaid time-delay means (18) consist of two throttled or non-throttled ducts (19, 20), each one connecting one of the oil chambers (11, 12) of the height corrector to a point (19a, 20a) of the jacket (13) in which is sliding the spool which is connected to the other oil chamber only after the aforesaid defined stroke of this spool (T) caused by the initiator (2, 4, 6).

6. Suspension according to one of claims 1 to 5, characterized in that each initiator consists of a body (21, 100) with a jacket (22, 23, 101, 102) mounted in fluid-tight relationship at each end and a piston (24, 105) slidably mounted in this body and in equilibrium between two springs (25, 26, 106, 107) bearing upon the jackets, each jacket comprising at least one bore (29, 30, 111, 112, 115, 116) in which is sliding a spool (31, 32, 109, 110, 113, 114) bearing upon the piston, so that a hydraulic pressure upon the spool causes a displacement of the piston (24, 105) hence of an oil volume which in turn causes the displacement of the spool (T) of the height corrector.

7. Suspension according to one of the foregoing claims, characterized in that the aforesaid initiator (2, 4, 6) comprises at least two hydraulic fluid chambers (36, 38, 122, 124) separated by the piston (24, 105) and communicating through ducts (35, 37, 121, 123) with both oil chambers (11, 12), respectively, of the height corrector.

8. Suspension according to one of the foregoing claims, characterized in that the aforesaid initiator (2, 4) comprises in association a first system of spools (109, 110) capable of acting upon the piston (105) to ensure an anti-pitching function and a second system of spools (113, 114) also capable of acting upon this piston to ensure an anti-rolling function in the case where each one of the wheels of the front axle is fitted with a height corrector (1, 3).

9. Suspension according to one of the foregoing claims, characterized in that the first system of spools assigned to the anti-pitching function consists of two spools controlled the one (110) by a pressure depending of the braking and the other one (109) by a pressure depending of the acceleration whereas the second system of spools consists of two spools (113, 114) the sections of which are proportional to the useful sections of a steering-assisting jack (V), each spool (113, 114) being controlled by the pressure of either one of the two chambers (C1, C2) of this jack.

10. Suspension according to one of the foregoing claims, characterized in that the initiators (2, 4, 6) are connected to height correctors (1, 3, 5) so that a braking pressure results in a pressure increase in the jacks for the suspension of the front axle and in a pressure decrease in the jacks for the suspension of the rear axle, that an acceleration causes a pressure decrease in the front suspension jacks and a pressure increase in the back suspension jacks and that an action upon the steering wheel causes a pressure decrease in the front jack internally of the corner and a pressure increase in the front jack externally of the corner.
